# FASCICULE DE BREVET EUROPEEN

(11) **EP 3 970 225 B1**
(45) Date de publication et mention de la délivrance du brevet: **13.09.2023**
(21) Numéro de dépôt: 20724146.4
(22) Date de dépôt: 12.05.2020
(51) Int. Cl.: H01M 10/42, H01M 6/50

(54) **PROCEDE D'EXTINCTION D'UN GENERATEUR ELECTROCHIMIQUE DANS LE CAS D'UN EMBALLEMENT THERMIQUE**
VERFAHREN ZUM LÖSCHEN EINES ELEKTROCHEMISCHEN GENERATORS IM FALL VON THERMISCHEM DURCHGEHEN
METHOD FOR EXTINGUISHING AN ELECTROCHEMICAL GENERATOR IN THE EVENT OF OF THERMAL RUNAWAY

(30) Priorité: 15.05.2019 FR 1905067
(43) Date de publication de la demande: 23.03.2022
(73) Titulaire: Commissariat à l'énergie atomique et aux énergies alternatives, 75015 Paris (FR)
(72) Inventeur: BILLY, Emmanuel, 38054 GRENOBLE CEDEX 09 (FR); BRUN-BUISSON, David, 38054 GRENOBLE CEDEX 09 (FR)
(74) Mandataire: Brevalex
(86) Numéro de dépôt international: PCT/EP2020/063207
(87) Numéro de publication internationale: WO 2020/229479

(56) Documents cités:
- JP-A- 2017 158 997
- KR-B1- 101 718 917

## Description

### DOMAINE TECHNIQUE

La présente invention se rapporte au domaine de la mise en sécurité, par extinction, d'un générateur électrochimique, comme un accumulateur ou une batterie Li-lon, Na-lon, ou Lithium-métal, soumis à un emballement thermique.

Plus spécifiquement, il s'agit d'un procédé de mise en sécurité d'un générateur électrochimique dans lequel on refroidit et/ou on décharge le générateur électrochimique avec une solution contenant un liquide ionique.

La mise en sécurité peut concerner une extinction automatique par noyage du générateur électrochimique dans une application stationnaire.

La mise en sécurité peut également être réalisée au moyen d'un dispositif mobile, comme un extincteur, lors d'une intervention de pompier par exemple.

### ÉTAT DE LA TECHNIQUE ANTÉRIEURE

Un générateur électrochimique est un dispositif de production d'électricité convertissant de l'énergie chimique en énergie électrique. Il peut s'agir, par exemple, de piles ou d'accumulateurs.

Le marché des accumulateurs, et notamment des accumulateurs au lithium, de type Li-ion, est aujourd'hui en forte expansion, d'une part, du fait des applications dites nomades (smartphone, outillage électroportatif...) et, d'autre part, du fait des nouvelles applications liées à la mobilité (véhicules électriques et hybrides) et aux applications dites stationnaires (connectées au réseau électrique).

Un accumulateur électrochimique au lithium, de type Li-ion, comporte au moins une cellule électrochimique comprenant une anode (électrode négative) et une cathode (électrode positive) disposées de part et d'autre d'un séparateur imprégné d'électrolyte, ainsi que des collecteurs de courant.

Les accumulateurs électrochimiques de type métal-ion fonctionnent selon le principe d'insertion ou de désinsertion (ou autrement dit intercalationdésintercalation) d'ion métal dans au moins une électrode. Lors de la charge, le lithium se désintercale du matériau actif de la cathode et s'insère le matériau actif de l'anode, par exemple en graphite. Lors de la décharge, le processus est inversé.

Lorsqu'un accumulateur est placé dans des conditions inhabituelles, comme une exposition à une température extrême, une utilisation électrique hors spécification constructeur, voire une dégradation de l'intégrité physique, il peut se produire des réactions de dégradation chimiques et/ou un court-circuit électrique interne. Ces phénomènes peuvent conduire à un dégagement de chaleur interne intense, une génération de gaz ou de feu voire même une détente pneumatique.

Les mécanismes chimiques sont initiés lorsque les matériaux sont soumis à une température supérieure à celle de l'activation des réactions. Typiquement, dans le cas de la réaction entre la couche de passivation du graphite (appelée SEI pour « Solid Electrolyte Interface ») et de l'électrolyte, la température d'initiation du mécanisme de dégradation est d'environ 80°C.

Le dégagement de chaleur interne générée peut activer d'autres phénomènes exothermiques comme la réaction du matériau de cathode avec l'électrolyte (160 à 200°C environ), ou la génération d'un court-circuit interne (fonte du séparateur entre 120 et 160°C environ). Chacun de ces échauffements peut être le précurseur de l'activation d'autres mécanismes. On parle alors d'emballement.

Pour limiter ou stopper l'emballement thermique et empêcher l'apparition de phénomènes indésirables, il est nécessaire de limiter l'élévation de température par un refroidissement efficace de l'accumulateur et/ou par une diminution de la quantité d'énergie électrique contenue dans l'accumulateur (décharge). En effet, l'échauffement induit par le court-circuit interne et les réactions de dégradation tendent à disparaitre lorsque l'accumulateur est déchargé.

Classiquement, pour stopper l'emballement thermique de l'accumulateur, il est possible de réaliser une étape d'arrosage, voire de noyage, avec un agent extincteur à base aqueuse. L'eau offre un double avantage :
une bonne qualité de refroidissement ainsi qu'une décharge de l'énergie électrique lorsque le milieu aqueux est conducteur et continu entre les potentiels de l'accumulateur.

Cependant, ce moyen d'extinction présente l'inconvénient de produire du dihydrogène gazeux qui peut s'enflammer. De plus, si l'intégrité de l'accumulateur n'est pas conservée, les matériaux actifs vont réagir violement avec l'eau, et produire de fortes chaleurs ainsi que de l'hydrogène gazeux.

Cette problématique est d'autant plus d'actualité que les fabricants ont pour objectif d'augmenter constamment l'énergie de leurs accumulateurs et utilisent donc des matériaux de plus en plus exothermiques.

### EXPOSÉ DE L'INVENTION

Un but de la présente invention est de proposer un procédé permettant de remédier aux inconvénients de l'art antérieur, et en particulier un procédé d'extinction pour mettre en sécurité un générateur électrochimique, en offrant un bon refroidissement et/ou en déchargeant le générateur, le procédé ne produisant pas de dihydrogène.

Pour cela, la présente invention propose un procédé d'extinction d'un générateur électrochimique, en particulier soumis à un emballement thermique, le générateur électrochimique comprenant une première électrode et une seconde électrode, la première électrode étant reliée à un premier terminal et la seconde électrode étant reliée à un second terminal ou la masse du générateur électrochimique,
le procédé comprenant une étape au cours de laquelle le générateur électrochimique est recouvert par une solution de liquide ionique,
la solution de liquide ionique recouvrant continûment le générateur électrochimique du premier terminal au deuxième terminal ou du premier terminal à la masse,
la solution de liquide ionique comprenant un liquide ionique et une espèce active ayant des propriétés d'extinction et/ou de retardateur de flamme.

Par emballement thermique, on entend l'activation de réactions de dégradation exothermique au sein du générateur, ce qui conduit à une augmentation de la température interne, et qui active une cascade de réactions chimiques indésirables.

L'invention se distingue fondamentalement de l'art antérieur par l'extinction du générateur électrochimique par une solution de liquide ionique.

Le procédé évite la génération d'oxygène et d'hydrogène, et donc ne présente pas de risques d'inflammation et d'explosion, par rapport à un procédé mettant en jeu une solution aqueuse.

L'utilisation d'une solution de liquide ionique réduit considérablement les contraintes liées à l'utilisation d'eau car les liquides ioniques sont non-volatiles, ininflammables et chimiquement stables à des températures pouvant être supérieures à 200°C (par exemple entre 200°C et 400°C).

Le générateur électrochimique peut être intact ou détérioré.

En cas de rupture de l'emballage, le milieu liquide ionique évite le contact entre l'air et les composants internes du générateur électrochimique et donc la formation d'un mélange air/vapeurs de l'électrolyte (fraction air/vapeurs) qui est particulièrement explosif.

Le procédé assure un refroidissement de l'accumulateur.

Il est simple à mettre en oeuvre.

Avantageusement, l'espèce active est un alkyl phosphate, éventuellement fluoré.

Avantageusement, l'espèce active représente de 5 à 80% en masse de la solution liquide ionique, et de préférence de 10 à 30% en masse.

Avantageusement, la solution liquide ionique comprend une espèce redox pouvant être oxydée et/ou réduite sur au moins l'un du premier terminal et du second terminal ou sur au moins l'un du premier terminal et de la masse. Avantageusement, la présence d'une espèce redox permet de décharger le générateur en évitant de dégrader/transformer le liquide ionique solvant.

Dans le cas de l'ouverture du générateur électrochimique, le liquide ionique solvant et/ou l'espèce redox peuvent réagir avec le matériau actif d'électrode, tel que le lithium ou le sodium, ce qui permet une mise en sécurité du générateur, en le déchargeant.

Avantageusement, la solution comprend un couple d'espèces redox comprenant une espèce redox dite oxydante et une espèce redox dite réductrice, l'espèce redox oxydante pouvant être réduite sur l'un du premier ou du second terminal (ou de la masse) et l'espèce redox réductrice pouvant être oxydée sur l'autre du premier ou du second terminal (ou de la masse).

Par couple redox, aussi appelé médiateur redox ou navette électrochimique, on entend un couple oxydant/réducteur (Ox/Red) en solution dont l'oxydant peut être réduit et le réducteur peut être oxydé sur les terminaux ou sur un terminal ou la masse du générateur électrochimique. Le couple redox assure les réactions redox.

La ou les espèces redox permettent de décharger significativement voire totalement le générateur électrochimique, en diminuant la différence de potentiel entre les électrodes (anode et cathode). Cette décharge participe également à la mise en sécurité du générateur électrochimique par la diminution de l'énergie chimique des électrodes (et donc la différence de potentiel) et par diminution de l'effet de court-circuit interne. Le générateur électrochimique est mis en sécurité même en cas de détérioration structurelle car les espèces redox peuvent réagir directement sur les électrodes.

Le procédé est économique puisque le couple redox en solution assure à la fois et simultanément les réactions redox aux terminaux du générateur électrochimique, de sorte que la consommation en réactif est nulle ; la solution peut être utilisée pour mettre en sécurité plusieurs générateurs électrochimiques successivement et/ou en mélange.

Avantageusement, le couple d'espèce redox est un couple métallique, de préférence choisi parmi Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺ ou Fe²⁺/Fe³⁺, un couple de molécules organiques, un couple de métallocènes tel que Fc/Fc⁺, ou un couple de molécules halogénées comme par exemple Cl₂/Cl⁻ ou Cl⁻/Cl³⁻.

Avantageusement, la solution de liquide ionique comprend un agent desséchant.

Avantageusement, la solution de liquide ionique comprend un agent favorisant le transport de matière, tel qu'un solvant organique.

Avantageusement, la solution de liquide ionique comprend un agent de protection apte à réduire et/ou stabiliser des éléments corrosifs et/ou toxiques. Ceci permet de réduire l'impact acide d'espèces toxiques et corrosives telles que le PF₅, HF, POF₃, etc.

Avantageusement, la solution liquide ionique comprend un liquide ionique additionnel.

Avantageusement, la solution liquide ionique forme un solvant eutectique profond.

Selon une première variante avantageuse, le générateur électrochimique est immergé dans la solution liquide ionique.

Selon une autre variante avantageuse, le générateur électrochimique est aspergé par la solution liquide ionique, par exemple au moyen d'un extincteur contenant la solution liquide ionique.

L'invention concerne également un dispositif de lutte contre l'incendie, tel qu'un extincteur, comprenant un réservoir de produit à pulvériser et une capsule de gaz sous pression, le produit à pulvériser étant une solution liquide ionique comprenant un liquide ionique solvant et une espèce active ayant des propriétés d'extinction et/ou de retardateur de flamme.

Le produit à pulvériser (ou agent extincteur) ne produit pas d'hydrogène, a une capacité calorifique de 1,2 à 2,2 J g⁻¹K⁻¹, et une conductivité thermique de l'ordre de 0,2 W m⁻¹K⁻¹. Il permet une extinction efficace et en toute sécurité des générateurs électrochimiques.

D'autres caractéristiques et avantages de l'invention ressortiront du complément de description qui suit.

Il va de soi que ce complément de description n'est donné qu'à titre d'illustration de l'objet de l'invention et ne doit en aucun cas être interprété comme une limitation de cet objet.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
La figure 1 représente, de manière schématique, une vue en coupe, d'un générateur électrochimique, selon un mode de réalisation particulier de l'invention,
La figure 2 représente, de manière schématique, une étape du procédé d'extinction d'un générateur électrochimique, selon un mode de réalisation particulier de l'invention,
La figure 3 représente, de manière schématique, une étape du procédé d'extinction d'un générateur électrochimique, selon un autre mode de réalisation particulier de l'invention,

La figure4 est une courbe intensité-potentiel représentant différents potentiels redox selon un mode de réalisation particulier de l'invention.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

Par la suite, même si la description fait référence à un accumulateur Li-ion, l'invention est transposable à tout générateur électrochimique, par exemple à une batterie comprenant plusieurs accumulateurs (appelées aussi batteries d'accumulateurs), connectés en série ou en parallèle, en fonction de la tension nominale de fonctionnement et/ou de la quantité d'énergie à fournir, ou encore à une pile électrique.

Ces différents dispositifs électrochimiques peuvent être de type métal-ion, par exemple lithium-ion ou sodium-ion, ou encore de type Li-métal,...

Il peut également s'agir d'un système primaire tel que Li/MnO₂, ou encore d'une batterie à circulation (« Redox Flow Battery »).

On choisira, avantageusement, un générateur électrochimique ayant un potentiel supérieur à 1,5V.

Par la suite, lorsque l'on décrit le lithium, le lithium peut être remplacé par le sodium.

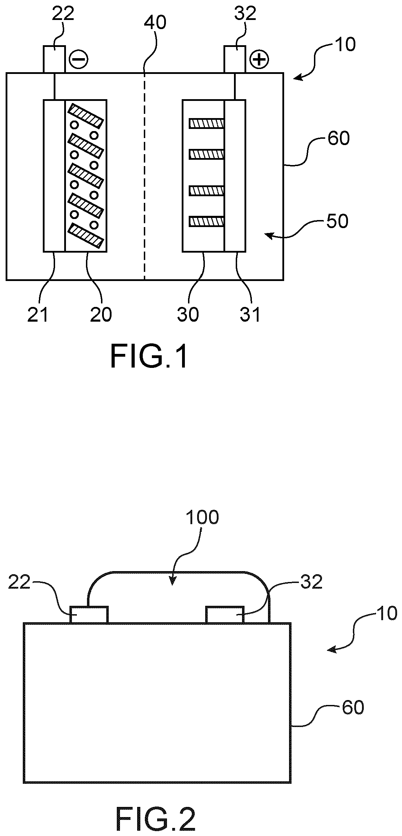

On se réfère tout d'abord à la figure 1 qui représente un accumulateur lithium-ion (ou Li-ion) 10. Une seule cellule électrochimique est représentée mais le générateur peut comprendre plusieurs cellules électrochimiques, chaque cellule comprenant une première électrode 20, ici l'anode, et une seconde électrode 30, ici la cathode, un séparateur 40 et un électrolyte 50. Selon un autre mode de réalisation, la première électrode 20 et la seconde électrode 30 pourraient être inversées.

L'anode (électrode négative) 20 est de préférence à base carbone, par exemple, en graphite pouvant être mélangé à un liant de type PVDF et déposé sur une feuille de cuivre. Il peut également s'agir d'un oxyde mixte de lithium comme le titanate de lithium Li₄T₁₅O₁₂ (LTO) pour un accumulateur Li-ion ou d'un oxyde mixte de sodium comme le titanate de sodium pour un accumulateur Na-ion. Il pourrait également s'agir d'un alliage de lithium ou d'un alliage de sodium en fonction de la technologie choisie.

La cathode (électrode positive) 30 est un matériau d'insertion d'ions lithium pour un accumulateur Li-ion. Il peut s'agir d'un oxyde lamellaire de type LiMOz, d'un phosphate LiMPO₄ de structure olivine ou encore d'un composé spinelle LiMn₂O₄. M représente un métal de transition. On choisira par exemple, une électrode positive en LiCoOz, LiMnOz, LiNiOz, Li₃NiMnCoO₆, ou LiFePO₄.

La cathode (électrode positive) 30 est un matériau d'insertion d'ions sodium pour un accumulateur Na-ion. Il peut s'agir d'un matériau du type oxyde sodié comprenant au moins un élément métallique de transition, d'un matériau du type phosphate ou sulfate sodié comprenant au moins un élément métallique de transition, d'un matériau du type fluorure sodié, ou encore d'un matériau du type sulfure comprenant au moins un élément métallique de transition.

Le matériau d'insertion peut être mélangé à un liant de type fluorure de polyvinylidène et déposé sur une feuille d'aluminium.

L'électrolyte 50 comporte des sels de lithium (LiPF₆, LiBF₄, LiClO₄ par exemple) ou des sels de sodium (N₃Na par exemple), en fonction de la technologie d'accumulateur choisie, solubilisés dans un mélange de solvants non aqueux. Le mélange de solvants est, par exemple, un mélange binaire ou ternaire. Les solvants sont, par exemple, choisis parmi les solvants à base de carbonates cycliques (carbonate d'éthylène, carbonate de propylène, butylène de carbonate), linéaires ou ramifiés (carbonate de diméthyle, carbonate de di-éthyle, carbonate d'éthyle méthyle, diméthoxyéthane) en proportion diverse.

De manière alternative, il pourrait également s'agir d'un électrolyte polymère comprenant une matrice polymère, en matériau organique et/ou inorganique, un mélange liquide comprenant un ou plusieurs sels métalliques, et éventuellement un matériau de renfort mécanique. La matrice polymère peut comprendre un ou plusieurs matériaux polymères par exemple choisis parmi un polyfluorure de vinylidène (PVDF), un polyacrylonitrile (PAN), un polyfluorure de vinylidène hexafluoropropylène (PVDF-HFP), ou un poly(liquide ionique) de type poly(N-vinylimidazolium) bis(trifluoromethanesulfonylamide)), N, N-diethyl- N- (2-methoxyethyl)- N-methylammonium bis(trifluoromethylsulfonyl)imide (DEMM-TFSI).

La cellule peut être enroulée sur elle-même autour d'un axe d'enroulement ou présenter une architecture empilée.

Un boitier 60 (« casing »), par exemple une poche en polymère, ou un emballage métallique, par exemple en acier, permet d'assurer l'étanchéité de l'accumulateur.

Chaque électrode 20, 30 est reliée à un collecteur de courant 21, 31 traversant le boitier 60 et formant, à l'extérieur du boitier 60, respectivement les terminaux 22, 32 (aussi appelés bornes de sortie ou pôles ou terminaux électriques). La fonction des collecteurs 21, 31 est double : assurer le support mécanique pour la matière active et la conduction électrique jusqu'aux terminaux de la cellule. Les terminaux aussi appelés pôles ou terminaux électriques) forment les bornes de sortie et sont destinés à être connectés à un « récepteur d'énergie ».

Selon certaines configurations, un des terminaux 22, 32 (par exemple celui relié à l'électrode négative) peut être relié à la masse du générateur électrochimique. On dit alors que la masse est le potentiel négatif du générateur électrochimique et que le terminal positif est le potentiel positif du générateur électrochimique. Le potentiel positif est donc défini comme le pôle/terminal positif ainsi que toutes les pièces métalliques raccordées par une continuité électrique depuis ce pôle.

Un dispositif électronique intermédiaire peut, éventuellement, être disposé entre le terminal qui est relié à la masse et cette dernière.

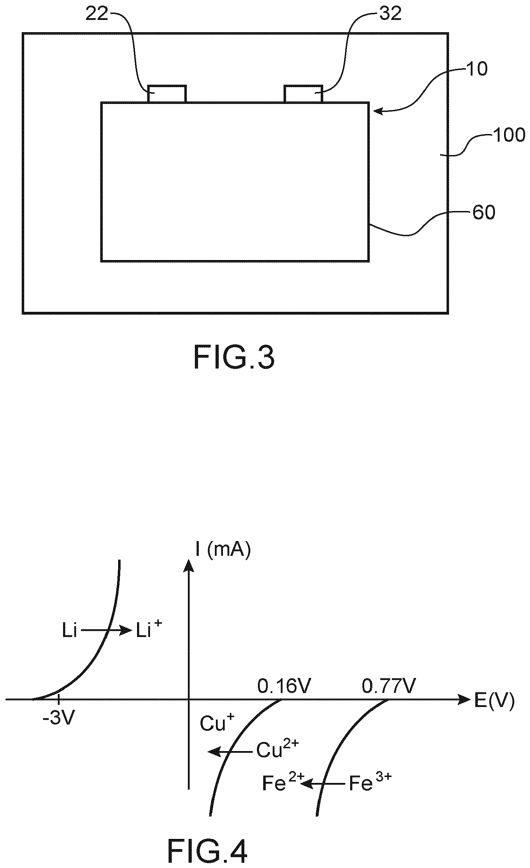

Comme représenté sur les figures 2 et 3, pour mettre en sécurité un tel accumulateur 10, le procédé d'extinction comporte une étape dans laquelle l'accumulateur 10 est recouvert au moins partiellement par une solution dite d'extinction.

Par recouvrir au moins partiellement, on entend que l'accumulateur 10, peut être :
- recouvert partiellement par la solution (figure 2), par exemple par aspersion, par tout moyen adapté, comme par exemple avec un extincteur, lors de l'intervention notamment d'un pompier, ou de toute autre personne ; ou
- recouvert totalement par la solution (figure 3), par exemple, par immersion, par exemple lors d'une extinction automatique, par noyage, notamment pour des applications stationnaires.

La solution d'extinction 100 est une solution liquide ionique (aussi appelée solution de liquide ionique), c'est-à-dire qu'elle comprend au moins un liquide ionique noté LI₁, appelé liquide ionique solvant, et une espèce active notée A1 qui est un agent d'extinction et/ou un retardateur de flamme visant à prévenir un emballement thermique.

On entend par liquide ionique l'association comprenant au moins un cation et un anion qui génère un liquide avec une température de fusion inférieure ou voisine de 100°C. Il s'agit de sels fondus.

On entend par liquide ionique solvant un liquide ionique qui est stable sur le plan thermique et électrochimique minimisant un effet de dégradation du milieu durant le phénomène de décharge.

La solution liquide ionique peut également comprendre un ou plusieurs (deux, trois par exemple) liquides ioniques additionnels, c'est-à-dire qu'elle comprend à un mélange de plusieurs liquides ioniques.

On entend par liquide ionique additionnel noté LI₂, un liquide ionique qui favorise une ou des propriétés vis-à-vis de l'étape de mise en sécurité et de décharge. Il peut s'agir, en particulier, d'une ou des propriétés suivantes : extinction, retardateur de flamme, navette redox, stabilisateur de sels, viscosité, solubilité, hydrophobicité, conductivité.

Avantageusement, le liquide ionique, et éventuellement, les liquides ioniques additionnels sont liquides à température ambiante (de 20 à 25°C).

Pour le liquide ionique solvant et pour le ou les liquides ioniques additionnels, le cation est, de préférence, choisi parmi la famille :
imidazolium, pyrrolidinium, ammonium, pipéridinium et phosphonium.

On choisira, avantageusement, de préférence, un cation à large fenêtre cationique, suffisamment important pour envisager une réaction cathodique évitant ou minimisant la dégradation du liquide ionique.

Avantageusement LI₁ et LI₂ auront le même cation pour augmenter la solubilité de LI₂ dans LI₁. Dans les nombreux systèmes possibles, on privilégiera un milieu à faible coût et à faible impact environnemental (biodégradabilité), non toxique.

Avantageusement, on utilisera des anions permettant d'obtenir simultanément une large fenêtre électrochimique, une viscosité modérée, une température de fusion basse (liquide à température ambiante) et une bonne solubilité avec le liquide ionique et les autres espèces de la solution, et ceci ne conduisant pas à l'hydrolyse (dégradation) du liquide ionique.

L'anion TFSI est un exemple qui répond aux critères précédemment mentionnés pour de nombreuses associations avec par exemple LI₁ :
[BMIM][TFSI], ou l'utilisation d'un liquide ionique de type [P66614][TFSI], le liquide ionique 1-ethyl-2,3-trimethyleneimidazolium bis(trifluoromethane sulfonyl)imide ([ETMIm][TFSI]), le liquide ionique N,N-diethyl-N-methyl-N-2-methoxyethyl ammonium bis(trifluoromethylsulfonyl)amide [DEME][TFSA], le liquide ionique N-Methyl-N-butylpyrrolidinium bis(trifluoromethylsufonyl)imide ([PYR14][TFSI]), le liquide ionique N-methyl-N-propylpiperidinium bis(trifluoromethanesulfonyl) imide (PP13-TFSI). L'anion peut également être de type bis(fluorosulfonyl)imide (FSA ou FSI), comme le liquide ionique N-methyl-N-propylpyrrolidinium FSI (P13-FSI), le N-methyl-N-propylpiperidinium FSI (PP13-FSI), le 1-ethyl-3-methylimidazolium FSI (EMI-FSI), etc...

L'anion du liquide ionique solvant LI₁ et/ou du liquide additionnel LI₂ peuvent peut être un anion complexant pour former un complexe avec la navette électrochimique.

D'autres associations sont envisageables, avec des liquides ioniques dont le cation sera associé à un anion qui sera indifféremment organique ou inorganique, ayant préférentiellement une large fenêtre anodique.

La solution liquide ionique forme, avantageusement, un solvant eutectique profond (ou DES pour "deep eutectic solvents"). Il s'agit d'un mélange liquide à température ambiante obtenu par formation d'un mélange eutectique de 2 sels, de formule générale :

[Cat]⁺.[X]⁻.z[Y]

avec
[Cat]⁺ est le cation du liquide ionique solvant (par exemple ammonium),
[X]⁻ l'anion halogénure (par exemple Cl⁻),
[Y] un acide de Lewis ou de Brönsted qui peut être complexé par l'anion X⁻ du liquide ionique solvant, et
z le nombre de molécules Y.

Les eutectiques peuvent être divisés en trois catégories suivant la nature de Y.

La première catégorie correspond à un eutectique de type I :
Y = MClₓ avec par exemple M = Fe, Zn, Sn, Fe, Al, Ga

La première catégorie correspond à un eutectique de type Il :
Y = MCIx.yHzO avec par exemple M = Cr, Co, Cu, Ni, Fe

La première catégorie correspond à un eutectique de type III :
Y= RZ avec par exemple Z = CONH₂, COOH, OH.

Par exemple, le DES est le chlorure de choline en association avec un donneur de liaison H d'une très faible toxicité, comme le glycérol ou l'urée, ce qui garantit un DES non toxique et à très faible coût.

Selon un autre exemple de réalisation, la chlorure de choline peut être remplacée par de la bétaïne. Même si ces systèmes possèdent une fenêtre de stabilité électrochimique limitée, ils permettent de garantir le noyage et la désactivation d'un accumulateur, éventuellement, ouvert.

Avantageusement, on choisira un composé « Y » pouvant jouer le rôle de navette électrochimique, pouvant être oxydé et/ou réduit. Par exemple, Y est un sel de métal, pouvant être dissous dans la solution liquide ionique de manière à former des ions métalliques. Par exemple, Y contient du fer.

A titre illustratif, on peut former un eutectique entre un liquide ionique à anion chlorure et des sels métalliques FeCl₂ et FeCl₃ pour différentes proportions et avec différents cations.

Il est également possible de réaliser ce type de réactions avec des eutectiques de type Il qui intègrent dans les sels métalliques des molécules d'eau lorsque la proportion en eau est faible cela ne génère pas de danger. Par faible, on entend typiquement moins de 10% en masse de la solution, par exemple de 5 à 10% en masse de la solution.

On peut également utiliser des eutectiques de type III qui associent le liquide ionique et des espèces donneuses de liaisons hydrogènes (Y), avec un mélange de type [LI₁]/[Y] ou LI₁ peut être un ammonium quaternaire et Y une molécule complexante (donneur de liaison hydrogène) comme l'urée, l'éthylène glycol, la thiourée, etc....

On peut également réaliser un mélange qui va avantageusement modifier les propriétés de la solution pour la décharge du milieu. On peut notamment associer un liquide ionique solvant de type [BMIM][NTF₂] très stable et liquide à température ambiante, mais qui solubilise faiblement la navette électrochimique (ou médiateur redox), comme un chlorure de fer.

Le liquide ionique additionnel LI₂ peut être de type [BMIM][CI], l'anion [CI] favorisera la solubilisation d'un sel métallique (MClₓ) par complexation. Ceci permet de simultanément avoir de bonnes propriétés de transport, une bonne solubilité du médiateur redox et donc favoriser le phénomène de décharge.

L'espèce active notée A1 est un agent d'extinction et/ou un retardateur de flamme visant à prévenir un emballement thermique, notamment en cas d'ouverture d'accumulateur. Il peut s'agir d'un alkyl phosphate, éventuellement fluoré (alkyl phosphate fluoré), comme le phosphate de triméthyle, le phosphate de triéthyle, ou le tris(2,2,2-trifluoroethyl) phosphate). La concentration en espèce active peut être de 80% en masse à 5%, de préférence de 30% à 10% en masse.

De préférence, la solution comprend, en outre, une espèce redox notée A2 pouvant être oxydée et/ou réduite sur au moins l'un des terminaux ou au moins sur la masse. L'espèce redox permet de sécuriser l'accumulateur.

De préférence, il s'agit d'un couple redox jouant le rôle de navette électrochimique (ou de médiateur redox) pour réduire la dégradation du milieu, en assurant les réactions redox.

On entend par couple redox, un oxydant et un réducteur en solution capable d'être, respectivement, réduit et oxydé sur les terminaux des piles. L'oxydant et le réducteur peuvent être introduits en proportion équimolaire ou non équimolaire.

En cas d'ouverture du générateur électrochimique, une des espèces redox peut provenir du générateur lui-même. Il peut s'agir notamment de cobalt, nickel et/ou manganèse.

Le couple redox peut être un couple électrochimique métallique ou une de leurs associations :
Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺ ou Fe²⁺/Fe³⁺.

L'espèce redox et le couple redox peuvent également être choisis parmi les molécules organiques, et en particulier parmi : 2,4,6-tri-t-butylphénoxyl, nitronyl nitroxide/2,2,6,6-tetraméthyl-1-piperidinyloxy (TEMPO), tétracyanoéthylène, tétraméthylphénylènedi-amine, dihydrophénazine, des molécules aromatiques comme méthoxy, le groupe N,N-diméthylamino (anisole méthoxybenzène, diméthoxybenzène, et N,N-diméthylaniline N,N-diméthylaminobenzène). On peut également mentionner le 10-méthyl-phénothiazine (MPT), 2,5-di-tert-butyl-1,4-diméthoxybenzène (DDB) et le 2-(pentafluorophényl)-tétrafluoro-1,3,2-benzodioxaborole (PFPTFBDB).

Il peut également s'agir de la famille des métallocènes (Fc/Fc+, Fe(bpy)₃(ClO₄)₂ et Fe(phen) ₃(ClO₄)₂ et ses dérivés) ou de la famille des molécules halogénés (Cl₂/Cl⁻, Cl⁻/Cl³⁻ Br₂/Br⁻, I₂/I⁻, I⁻/I₃⁻).

On choisira notamment un bromure ou un chlorure. De préférence il s'agit d'un chlorure, pouvant facilement complexer les métaux. Par exemple, le fer, complexé par l'anion chlorure, forme du FeCl₄⁻ qui peut diminuer la réactivité de l'électrode négative.

Il peut également s'agir du tétraméthylphénylènediamine.

On pourra également associer plusieurs couples redox, dont les métaux des ions métalliques sont identiques ou différents.

On choisira par exemple Fe²⁺/Fe³⁺ et/ou Cu⁺/Cu²⁺. Ces derniers sont solubles dans leurs deux états d'oxydation, ils ne sont pas toxiques, ils ne dégradent pas le liquide ionique et ils ont des potentiels redox adéquats pour extraire le lithium (figure 4).

Optionnellement, la solution liquide ionique peut comprendre un agent desséchant noté A3, et/ou un agent favorisant le transport de matière A4, et/ou un agent de protection qui est un stabilisateur/réducteur d'espèces corrosives et toxiques A5 comme PF₅, HF, POF₃,...

L'agent favorisant le transport de matière noté A4 est, par exemple, une fraction d'un co-solvant pouvant être ajouté pour diminuer la viscosité.

Il peut s'agir d'une faible proportion d'eau, comme 5% d'eau.

De préférence, on choisira un solvant organique pour agir efficacement sans générer de risques vis-à-vis de la décharge ou de l'inflammabilité. Il peut s'agir de vinylène carbonate (VC), de gamma-butyrolactone (y-BL), de propylène carbonate (PC), de poly(éthylène glycol), de diméthyl éther. La concentration de l'agent favorisant le transport de matière va, avantageusement, de 1% à 40% et plus avantageusement de 10% à 40 % en masse.

L'agent de protection apte à réduire et/ou stabiliser des éléments corrosifs et/ou toxiques A5 est, par exemple, un composé de de type butylamine, un carbodiimide (type N,N-dicyclohexylcarbodiimide), N,N-diethylamino trimethyl-silane, le tris(2,2,2-trifluoroethyl) phosphite (TTFP), un composé à base d'amine comme le 1-méthyl-2-pyrrolidinone, un carbamate fluoré ou le hexamethyl-phosphoramide. Cela peut également être un composé de la famille des cyclophosphazène comme l'hexaméthoxycyclotriphosphazène

Avantageusement, la solution liquide ionique comprend moins de 10% massique d'eau, préférentiellement moins de 5 % massique.

Encore plus préférentiellement, la solution liquide ionique est dépourvue d'eau.

Le procédé peut être mis en oeuvre à des températures allant de 0°C à 100°C, de préférence de 20°C à 60°C et encore plus préférentiellement il est mis en oeuvre à température ambiante (20-25°C).

Le procédé peut être réalisé sous air, ou sous atmosphère inerte, par exemple sous argon ou sous azote.

Dans le cas où le générateur électrochimique est immergé dans la solution d'extinction, la solution peut être agitée pour améliorer l'apport en réactif. Par exemple, il s'agit d'une agitation entre 50 et 2000 tour/min, et de préférence, entre 200 et 800 tour/min.

### Exemples illustratifs et non limitatifs d'un mode de réalisation :

### Exemple 1 : Décharge en milieu chlorure de choline urée FeCl_{3 :}

La solution liquide ionique est un mélange de chlorure de choline et d'urée, avec un rapport molaire 1 pour 2, auquel on a ajouté 0,3M de FeCl₃. Après séchage de la solution, une pile de type Li-ion 18650 est mise en contact avec 50mL de cette solution, à température ambiante sous une agitation de 800 tour/min. Après 96 heures la pile est extraite du bain et la tension de la pile est nulle indiquant la décharge du système.

L'immersion (noyage) de l'accumulateur Li-ion dans une solution liquide ionique contenant un agent d'extinction permet une décharge totale de l'accumulateur, et donc sa mise en sécurité électrique.

### Exemple 2 : Mise en sécurité d'un module d'accumulateur Li-ion en intervention pompier :

Un module d'accumulateurs, comprenant des accumulateurs Li-ion présentant une capacité de 20Ah et une tension de 50V, soit une énergie électrique de 1kWh. Le volume de ce module est de 8L pour un poids de 12kg. La capacité calorifique du module d'accumulateurs est estimée à 0,9 J.kg⁻¹.K⁻¹. Lors d'une défaillance de ce module, l'énergie thermique générée par les réactions exothermiques et la combustion est de 12000kJ (Valeur de référence : 1000kJ/kg d'accumulateur li-ion).

Afin de mettre en sécurité le module défaillant, le noyage du module est effectué avec une solution ionique liquide d'extinction contenant de l'éthaline (mélange de chlorure de choline : éthylène glycol en rapport massique 1 :2) avec un Cp de 2,2 J.g⁻¹.K¹, et du phosphate de triméthyle à 5 % massique. Le noyage du module est effectué avec une masse d'agent d'extinction de 120kg, soit un volume de 107L. Au regard de la masse du module et de celle de l'agent d'extinction, le système thermodynamique a une capacité calorifique totale d'environ 275 kJ.K⁻¹ (correspondant à 120000g x 2,2 J.g⁻¹K⁻¹ + 12000g x 0,9 J.kg⁻¹.K⁻¹). En prenant une température initiale de 20°C pour l'agent extincteur et pour le module d'accumulateurs, la température du système complet d'excèdera pas 64°C dans le cas d'un évènement redouté total du module (20°C + 12000 kJ/275 kJ.K⁻¹). Cette température est suffisamment faible pour garantir le maintien des propriétés de l'agent d'extinction, et pour une mise en sécurité du module.

De plus, la capacité de l'agent d'extinction pour décharger l'accumulateur va permettre de diminuer l'énergie de combustion du module d'accumulateurs, de l'ordre d'un facteur 2 lorsque qu'un accumulateur est totalement déchargé. Cet effet cumulé permet également de diminuer en parallèle la température maximale atteinte.

## Revendications

1. Procédé d'extinction d'un générateur électrochimique (10), en particulier en cas d'emballement thermique, le générateur électrochimique (10) comprenant une première électrode (20) et une seconde électrode (30), la première électrode (20) étant reliée à un premier terminal (22) et la seconde électrode (30) étant reliée à un second terminal (32) ou à la masse du générateur électrochimique,
**caractérisé en ce que** le procédé comporte une étape dans laquelle le générateur électrochimique (10) est recouvert par une solution de liquide ionique (100),
la solution de liquide ionique (100) comprenant un liquide ionique et une espèce active ayant des propriétés d'extinction et/ou de retardateur de flamme,
la solution de liquide ionique (100) recouvrant continûment le générateur électrochimique du premier terminal (22) au deuxième terminal (32) ou du premier terminal (22) à la masse, de manière à refroidir et/ou décharger le générateur électrochimique (10).

2. Procédé selon la revendication 1, **caractérisé en ce que** l'espèce active est un alkyl phosphate, éventuellement fluoré.

3. Procédé selon l'une des revendications 1 et 2, **caractérisé en ce que** l'espèce active représente de 5 à 80% en masse de la solution liquide ionique, et de préférence de 10 à 30% en masse.

4. Procédé selon l'une quelconque des revendications précédentes, **caractérisé en ce que** la solution liquide ionique (100) comprend une espèce redox pouvant être oxydée et/ou réduite.

5. Procédé selon la revendication précédente, **caractérisé en ce que** la solution liquide ionique (100) comprend un couple d'espèces redox comprenant une espèce redox dite oxydante et une espèce redox dite réductrice, l'espèce redox oxydante pouvant être réduite et l'espèce redox réductrice pouvant être oxydée.

6. Procédé selon la revendication 5, **caractérisé en ce que** le couple d'espèce redox est un couple métallique, de préférence choisi parmi Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺ ou Fe²⁺/Fe³⁺, un couple de molécules organiques, un couple de métallocènes tel que Fc/Fc⁺, ou un couple de molécules halogénées comme par exemple Cl₂/Cl⁻ ou Cl⁻/Cl³⁻.

7. Procédé selon l'une quelconque des revendications précédentes, **caractérisé en ce que** la solution de liquide ionique (100) comprend un agent desséchant.

8. Procédé selon l'une quelconque des revendications précédentes, **caractérisé en ce que** la solution de liquide ionique (100) comprend un agent favorisant le transport de matière, tel qu'un solvant organique.

9. Procédé selon l'une quelconque des revendications précédentes, **caractérisé en ce que** la solution de liquide ionique (100) comprend un agent de protection apte à réduire et/ou stabiliser des éléments corrosifs et/ou toxiques.

10. Procédé selon l'une quelconque des revendications précédentes, **caractérisé en ce que** la solution liquide ionique (100) comprend un liquide ionique additionnel.

11. Procédé selon l'une quelconque des revendications précédentes, **caractérisé en ce que** la solution liquide ionique (100) forme un solvant eutectique profond.

12. Procédé selon l'une quelconque des revendications 1 à 11, **caractérisé en ce que** le générateur électrochimique (10) est immergé dans la solution liquide ionique (100).

13. Procédé selon l'une quelconque des revendications 1 à 11, **caractérisé en ce que** le générateur électrochimique (10) est aspergé par la solution liquide ionique (100), par exemple au moyen d'un extincteur contenant la solution liquide ionique (100).

14. Dispositif de lutte contre l'incendie, tel qu'un extincteur, comprenant un réservoir de produit à pulvériser et une capsule de gaz sous pression, le produit à pulvériser étant une solution liquide ionique (100) comprenant un liquide ionique solvant et une espèce active ayant des propriétés d'extinction et/ou de retardateur de flamme pour la mise en oeuvre du procédé d'extinction d'un générateur électrochimique (10) selon l'une quelconque des revendications 1 à 11 et 13.

## Patentansprüche

1. Verfahren zum Löschen eines elektrochemischen Generators (10), insbesondere im Falle eines thermischen Durchgehens, wobei der elektrochemische Generator (10) eine erste Elektrode (20) und eine zweite Elektrode (30) umfasst, wobei die erste Elektrode (20) mit einem ersten Anschluss (22) verbunden ist und die zweite Elektrode (30) mit einem zweiten Anschluss (32) oder der Masse des elektrochemischen Generators verbunden ist,
**dadurch gekennzeichnet, dass** das Verfahren einen Schritt umfasst, in dem der elektrochemische Generator (10) mit einer ionischen Flüssigkeitslösung (100) bedeckt wird,
wobei die ionische Flüssigkeitslösung (100) eine ionische Flüssigkeit und eine aktive Spezies mit löschenden und/oder flammhemmenden Eigenschaften umfasst,
wobei die ionische Flüssigkeitslösung (100) den elektrochemischen Generator vom ersten Anschluss (22) bis zum zweiten Anschluss (32) oder vom ersten Anschluss (22) bis zur Masse kontinuierlich bedeckt, um den elektrochemischen Generator (10) zu kühlen und/oder zu entladen.

2. Verfahren nach Anspruch 1, **dadurch gekennzeichnet, dass** die aktive Spezies ein Alkylphosphat ist, das gegebenenfalls fluoriert ist.

3. Verfahren nach einem der Ansprüche 1 und 2, **dadurch gekennzeichnet, dass** die aktive Spezies 5 bis 80 Massen-% der ionischen Flüssigkeitslösung und vorzugsweise 10 bis 30 Massen-% ausmacht.

4. Verfahren nach einem der vorhergehenden Ansprüche, **dadurch gekennzeichnet, dass** die ionische Flüssigkeitslösung (100) eine Redoxspezies umfasst, die oxidiert und/oder reduziert werden kann.

5. Verfahren nach dem vorhergehenden Anspruch, **dadurch gekennzeichnet, dass** die ionische Flüssigkeitslösung (100) ein Paar von Redoxspezies umfasst, das eine sogenannte oxidierende Redoxspezies und eine sogenannte reduzierende Redoxspezies umfasst, wobei die oxidierende Redoxspezies reduziert sein kann und die reduzierende Redoxspezies oxidiert sein kann.

6. Verfahren nach Anspruch 5, **dadurch gekennzeichnet, dass** das RedoxSpezies-Paar ein Metallpaar, vorzugsweise ausgewählt aus Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺ oder Fe²⁺/Fe³⁺, ein organisches Molekülpaar, ein Metallocen-Paar wie Fc/Fc⁺ oder ein halogeniertes Molekülpaar wie zum Beispiel Cl₂/Cl⁻ oder Cl⁻/Cl³⁻ ist.

7. Verfahren nach einem der vorhergehenden Ansprüche, **dadurch gekennzeichnet, dass** die ionische Flüssigkeitslösung (100) ein Trocknungsmittel umfasst.

8. Verfahren nach einem der vorhergehenden Ansprüche, **dadurch gekennzeichnet, dass** die ionische Flüssigkeitslösung (100) ein Mittel umfasst, das den Materialtransport wie von einem organischen Lösungsmittel fördert.

9. Verfahren nach einem der vorhergehenden Ansprüche, **dadurch gekennzeichnet, dass** die ionische Flüssigkeitslösung (100) ein Schutzmittel umfasst, das dazu ausgelegt ist, korrosive und/oder toxische Elemente zu reduzieren und/oder stabilisieren.

10. Verfahren nach einem der vorhergehenden Ansprüche, **dadurch gekennzeichnet, dass** die ionische Flüssigkeitslösung {100) eine zusätzliche ionische Flüssigkeit umfasst.

11. Verfahren nach einem der vorhergehenden Ansprüche, **dadurch gekennzeichnet, dass** die ionische Flüssigkeitslösung (100) ein tiefes eutektisches Lösungsmittel bildet.

12. Verfahren nach einem der Ansprüche 1 bis 11, **dadurch gekennzeichnet, dass** der elektrochemische Generator (10) in die ionische Flüssigkeitslösung (100) eingetaucht wird.

13. Verfahren nach einem der Ansprüche 1 bis 11, **dadurch gekennzeichnet, dass** der elektrochemische Generator (10) mit der ionischen Flüssigkeitslösung (100) besprüht wird, zum Beispiel mit Hilfe eines Feuerlöschers, der die ionische Flüssigkeitslösung (100) enthält.

14. Brandbekämpfungsvorrichtung, wie etwa ein Feuerlöscher, umfassend einen Behälter mit einem zu versprühenden Produkt und einer Druckgaskapsel, wobei das zu versprühende Produkt eine ionische Flüssigkeitslösung (100) ist, die eine ionische flüssiges Lösungsmittel und eine aktive Spezies mit löschenden und/oder flammhemmenden Eigenschaften zum Durchführen des Verfahrens zum Löschen eines elektrochemischen Generators (10) nach einem der Ansprüche 1 bis 11 und 13 umfasst.

## Claims

1. Method for extinguishing an electrochemical generator (10), particularly in the event of a thermal runaway, the electrochemical generator (10) comprising a first electrode (20) and a second electrode (30), the first electrode (20) being connected to a first terminal (22) and the second electrode (30) being connected to a second terminal (32) or to the ground of the electrochemical generator,
**characterised in that** the process comprises a step in which the electrochemical generator (10) is covered by an ionic liquid solution (100),
the ionic liquid solution (100) comprising an ionic liquid and an active species with extinguishing and/or flame retardant properties.
the ionic liquid solution (100) continuously covering the electrochemical generator from the first terminal (22) to the second terminal (32) or from the first terminal (22) to the ground, so as to cool and/or discharge the electrochemical generator (10).

2. Method according to claim 1, **characterised in that** the active species is an alkyl phosphate, possibly fluorinated.

3. Method according to claims 1 and 2, **characterised in that** the active species represents 5 to 80% by mass of the ionic liquid solution, and preferably 10 to 30% by mass.

4. Method according to any one of the preceding claims, **characterised in that** the ionic liquid solution (100) comprises a redox species that can be oxidized and/or reduced.

5. Method according to the preceding claim, **characterised in that** the ionic liquid solution (100) comprises a couple of redox species comprising a so-called oxidizing redox species and a so-called reducing redox species, the oxidizing redox species possibly being reduced and the reducing redox species possibly being oxidized.

6. Method according to claim 5, **characterised in that** the redox species couple is a metallic couple, preferably chosen from among Mn²⁺/Mn³⁺, Co²⁺/Co³⁺, Cr²⁺/Cr³⁺, Cr³⁺/Cr⁶⁺, V²⁺/V³⁺, V⁴⁺/V⁵⁺, Sn²⁺/Sn⁴⁺, Ag⁺/Ag²⁺, Cu⁺/Cu²⁺, Ru⁴⁺/Ru⁸⁺ or Fe²⁺/Fe³⁺, an organic molecules couple, a metallocenes couple such as Fc/Fc⁺, or a halogenated molecules couple such as for example Cl₂/Cl⁻ or Cl⁻/Cl³⁻.

7. Method according to any one of the preceding claims, **characterised in that** the ionic liquid solution (100) comprises a drying agent.

8. Method according to any one of the preceding claims, **characterised in that** the ionic liquid solution (100) comprises an agent promoting material transport, such as an organic solvent.

9. Method according to any one of the preceding claims, **characterised in that** the ionic liquid solution (100) comprises a protective agent that can reduce and/or stabilise corrosive and/or toxic elements.

10. Method according to any one of the preceding claims, **characterised in that** the ionic liquid solution (100) comprises an additional ionic liquid.

11. Method according to any one of the preceding claims, **characterised in that** the ionic liquid solution (100) forms a deep eutectic solvent.

12. Method according to any one of claims 1 to 11, **characterised in that** the electrochemical generator (10) is immersed in the ionic liquid solution (100).

13. Method according to any one of claims 1 to 11, **characterised in that** the electrochemical generator (10) is sprayed with the ionic liquid solution (100), for example by means of an extinguisher containing the ionic liquid solution (100).

14. Fire-fighting device such as a fire extinguisher, comprising a tank containing product to be sprayed and a pressurised gas capsule, the product to be sprayed being an ionic liquid solution (100) comprising a solvent ionic liquid and an active species having extinguishing and/or flame-retardant properties for use of the method of extinguishing an electrochemical generator (10) according to any one of claims 1 to 11 and 13.
